# EUROPEAN PATENT APPLICATION

(11) **EP 4 113 654 A1**
(43) Date of publication of application: **04.01.2023**
(21) Application number: 21883172.5
(22) Date of filing: 19.10.2021
(51) Int. Cl.: H01M 4/13, H01M 4/62, H01M 4/139, H01M 4/04, H01M 4/131, H01M 10/052

(54) **ELECTRODE FOR SECONDARY BATTERY, SECONDARY BATTERY INCLUDING SAME, AND ELECTRODE MANUFACTURING METHOD**

(30) Priority: 21.10.2020 KR 20200137053; 15.10.2021 KR 20210137264
(71) Applicant: LG Energy Solution, Ltd., Seoul 07335 (KR)
(72) Inventor: KIM, Myeongsoo, Daejeon 34122 (KR); KIM, Jeonggil, Daejeon 34122 (KR); KIM, Taegon, Daejeon 34122 (KR)
(74) Representative: Plasseraud IP
(86) International application number: PCT/KR2021/014535
(87) International publication number: WO 2022/086103

(57) **Abstract**

An electrode for secondary battery according to an embodiment of the present disclosure includes an electrode current collector; and an electrode layer located on the electrode current collector, wherein the electrode layer comprises an electrode composition in which an active material, a conductive material, and a binder are dry-mixed, wherein the binder comprises a first fiber and a second fiber that are fiberized from the first fiber, and wherein a diameter of the first fiber is larger than a diameter of the second fiber.

## Description

### [TECHNICAL FIELD]

### Cross Citation with Related Application(s)

This application claims the benefit of Korean Patent Application No. 10-2020-0137053 filed on October 21, 2020 and Korean Patent Application No. 10-2021-0137264 filed on October 15, 2021 in the Korean Intellectual Property Office, the disclosures of which are incorporated herein by reference in their entirety.

The present disclosure relates to an electrode for secondary battery, a secondary battery including same, and a method of manufacturing an electrode, and more particularly, to an electrode for secondary battery having improved tensile strength and flexibility, a secondary battery including same, and a method of manufacturing an electrode.

### [BACKGROUND]

Along with the technology development and increased demand for mobile devices, demand for secondary batteries as energy sources has been rapidly increasing. Among these secondary batteries, a lithium secondary battery having high energy density and a high voltage, a long cycle lifespan, and a low self-discharge rate is commercially available and widely used.

In particular, a secondary battery has attracted considerable attention as an energy source for power-driven devices, such as an electric bicycle, an electric vehicle, and a hybrid electric vehicle, as well as an energy source for mobile devices, such as a mobile phone, a digital camera, a laptop computer and a wearable device.

In addition, as interest in environmental issues grows, studies are frequently conducted on an electric vehicle, a hybrid electric vehicle, etc. which can replace a vehicle using fossil fuels such as a gasoline vehicle and a diesel vehicle, which are one of the main causes of air pollution. Although a nickel metal hydride secondary battery is mainly used as a power source for the electric vehicle and the hybrid electric vehicle, research on the use of a lithium secondary battery having high energy density is actively being conducted, a part of which are in the commercialization stage.

Conventional electrodes for secondary batteries are generally manufactured in a wet manner. However, when the electrode is manufactured in a wet manner, a heat treatment process at a high temperature is essentially required, and there is a risk that the metal oxide may be damaged. Therefore, there is a growing need to develop an electrode manufactured in a dry manner.

### [DETAILED DESCRIPTION OF THE INVENTION]

### [Technical Problem]

It is an object of the present disclosure to provide an electrode for secondary battery having improved tensile strength and flexibility, a secondary battery including same, and a method of manufacturing an electrode.

The objects of the present disclosure are not limited to the aforementioned objects, and other objects which are not described herein should be clearly understood by those skilled in the art from the following detailed description and the accompanying drawings.

### [Technical Solution]

According to an embodiment of the present disclosure, there is provided an electrode for secondary battery comprising: an electrode current collector; and an electrode layer located on the electrode current collector, wherein the electrode layer comprises an electrode composition in which an active material, a conductive material, and a binder are dry-mixed, wherein the binder comprises a first fiber and a second fiber that are fiberized from the first fiber, and wherein a diameter of the first fiber is larger than a diameter of the second fiber.

The diameter of the first fiber may be 6.1 um or more and 64.9 um or less.

The diameter of the second fiber may be 0.01 um or more and 2.0 um or less.

A content of the binder may be 1% by weight to 5% by weight based on the total weight of the electrode composition.

The electrode for secondary battery may have a contact angle deviation of 0.01 degrees or more and 5.0 degrees or less.

The binder may include polytetrafluoroethylene (PTFE).

The active material may include at least one selected from the group consisting of lithium cobalt oxide (LiCoO₂), lithium nickel oxide (LiNiO₂), lithium manganese oxide, lithium copper oxide (Li₂CuO₂), vanadium oxide, a Ni-site type lithium nickel oxide, lithium manganese composite oxide, lithium manganese composite oxide having a spinel structure, LiMn₂O₄ in which a part of Li in formula is substituted with an alkaline earth metal ion, a disulfide compound; Fe₂(MoO₄)₃, and lithium manganese oxide (LMO).

The electrode composition is manufactured into a freestanding film, and the freestanding film may be attached onto the electrode current collector.

The freestanding film may have a tensile strength of 13kgf/cm² or more and 30kgf/cm² or less.

According to another embodiment of the present disclosure, there is provided a method of manufacturing an electrode for secondary battery, the method comprising the steps of: dry-mixing an active material, a conductive material and a binder to prepare a mixture; applying a shearing force to the mixture at a first speed to prepare a first electrode composition; applying a shearing force to the first electrode composition at a second speed to prepare a second electrode composition, and manufacturing an electrode for secondary battery in which an electrode layer including the second electrode composition is located on an electrode current collector, wherein the first speed is faster than the second speed.

The binder included in the first electrode composition includes a first fiber, the binder included in the second electrode composition includes the first fiber and the second fiber that are fiberized from the first fiber, and a diameter of the first fiber may be larger than a diameter of the second fiber.

The diameter of the first fiber may be 6.1 um or more and 64.9 um or less.

The diameter of the second fiber may be 0.01 um or more and 2.0 um or less.

The first speed may be 2000rpm to 6000rpm, and the second speed may be 1 rpm to 50 rpm.

A content of the binder may be 1% by weight to 5% by weight based on the total weight of the electrode composition.

The binder may include polytetrafluoroethylene (PTFE).

The active material may include at least one selected from the group consisting of lithium cobalt oxide (LiCoO₂), lithium nickel oxide (LiNiO₂), lithium manganese oxide, lithium copper oxide (Li₂CuO₂), vanadium oxide, a Ni-site type lithium nickel oxide, lithium manganese composite oxide, lithium manganese composite oxide having a spinel structure, LiMn₂O₄ in which a part of Li in formula is substituted with an alkaline earth metal ion; a disulfide compound, Fe₂(MoO₄)₃, and lithium manganese oxide (LMO).

In the step of manufacturing an electrode for secondary battery in which an electrode layer including the second electrode composition is located on an electrode current collector, the second electrode composition may be manufactured into a freestanding film and attached onto the electrode current collector.

The freestanding film may have a tensile strength of 13kgf/cm² or more and 30kgf/cm² or less.

According to yet another embodiment of the present disclosure, there is provided a secondary battery comprising the above-mentioned electrode for secondary battery.

### [Advantageous Effects]

According to embodiments of the present disclosure, an electrode for secondary battery and a secondary battery including the same can be manufactured in a dry manner including a high-speed high-shear mixing step and a low-speed shear mixing step, thereby improving the tensile strength and flexibility of the electrode.

The effects of the present disclosure are not limited to the effects mentioned above and additional other effects not described above will be clearly understood from the description of the appended claims by those skilled in the art.

### [BRIEF DESCRIPTION OF THE DRAWINGS]

Fig. 1 is a diagram schematically showing an electrode composition of an electrode for secondary battery according to an embodiment of the disclosure;
Fig. 2 is a flowchart showing a method of manufacturing an electrode for secondary battery according to another embodiment of the present disclosure;
Fig. 3 is a graph for comparing tensile strength, extension rate, and contact angle deviation according to the diameter of a first fiber of a binder included in an electrode for secondary battery in Examples and Comparative Examples of the present disclosure; and
Fig. 4 is a graph for comparing tensile strength, extension rate, and contact angle deviation according to the diameter of a second fiber of a binder included in an electrode for a secondary battery in Examples and Comparative Examples of the present disclosure.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Now, an electrode for secondary battery according to an embodiment of the present disclosure will be described.

The electrode for secondary battery according to an embodiment of the present disclosure includes an electrode current collector; and an electrode layer formed of a freestanding film on the electrode current collector. The electrode layer includes an electrode composition in which an active material, a conductive material, and a binder are dry-mixed.

The electrode layer may be formed by a lamination process after a freestanding film is first produced, and the freestanding film is attached onto the electrode current collector. Here, the freestanding film may have a tensile strength of 13 kgf/cm² or more and 30 kgf/cm² or less.

Thereby, the freestanding film may be in a state in which the active material, the conductive material, and the binder included in the electrode composition are mixed with each other with high binding force, and the freestanding film may be easily stored in the form of a roll. Further, the productivity is improved, and it may be effective in improving the flexibility of the electrode. However, when the tensile strength of the freestanding film is less than 13kgf/cm², during charge and discharge, cracks are generated between the electrode active materials in the electrode, and the flexibility of the electrode is lowered, and so storage may not be easy in the manufacturing process.

Further, the electrode for secondary battery may have a contact angle deviation of 0.01 degrees or more and 5.0 degrees or less. More preferably, the electrode for secondary battery may have a contact angle deviation of 0.05 degrees or more and 4.0 degrees or less. As an example, the electrode for secondary battery may have a contact angle deviation of 0.1 degrees or more and 3.0 degrees or less. Here, the contact angle may mean an average and standard deviation of contact angles for each corner and a center portion of the electrode surface.

Thereby, the electrode for secondary battery has a small deviation in contact angle and thus, the dispersibility of the binder included in the electrode composition can be improved. Further, the bridging effect of the binder is excellent, and thus the resistance reduction effect of the electrode including the electrode composition can be excellent.

However, when the contact angle of the electrode for secondary battery is larger than 5.0 degrees, the deviation in contact angle may increase and thus, the dispersibility of the binder included in the electrode composition can be reduced. In addition, the bridging effect of the binder resulting therefrom is reduced, the resistance of the electrode including the electrode composition is high, and the discharge capacity of the battery cell can also be reduced.

Next, each component included in the electrode for secondary battery according to an embodiment of the present disclosure will be described in detail.

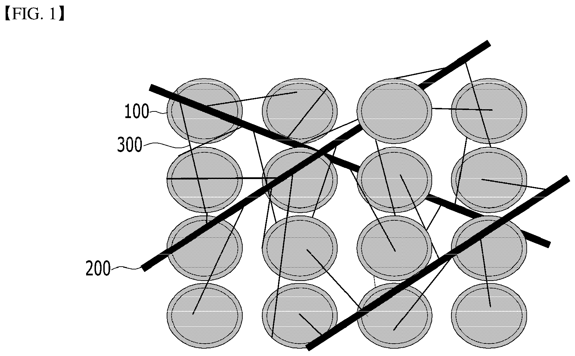

Fig. 1 is a diagram schematically showing an electrode composition of an electrode for secondary battery according to an embodiment of the disclosure.

Referring to FIG. 1, in the electrode composition constituting the electrode layer included in the electrode for secondary battery according to the present embodiment, the binder includes a first fiber 200 and a second fiber 300 that are located between the plurality of active material particles 100. Here, the second fiber 300 may be fiberized from the first fiber 200. In other words, the second fiber 300 may be formed to extend from the first fiber 200. More specifically, " the second fiber 300 is fiberized from the first fiber 200" herein means that the second fiber 300 is drawn out or extended from the first fiber 200 as a predetermined pressure and/or frictional force is applied to the first fiber 200.

However, in addition to the face that the second fiber 300 is fiberized from the first fiber 200, the second fiber 300 may also include, but not limited thereto, fibers that are separated from the first fiber 200 or are formed by agglomerating the binder particles separately.

The binder performs the role of improving adhesion between active material particles and an adhesive force between the active material and the current collector. Specific examples thereof include polytetrafluoroethylene (PTFE), polyvinylidene fluoride (PVDF), a vinylidene fluoride-co-hexafluoropropylene copolymer (PVDF-co-HFP), polyvinyl alcohol, polyacrylonitrile, carboxymethyl cellulose (CMC), starch, hydroxypropylcellulose, regenerated cellulose, polyvinyl pyrrolidone, tetrafluoroethylene, polyethylene, polypropylene, an ethylenepropylene-diene monomer (EPDM), a sulfonated EPDM, styrene butadiene rubber (SBR), fluoro rubber, or various copolymers thereof, and these may be used either singly or as a mixture of two or more.

In one example, the binder may include polytetrafluoroethylene (PTFE). Here, polytetrafluoroethylene (PTFE) has a characteristic that the fibers are pulled out from the particles as a shearing force is applied. That is, in the electrode for secondary battery according to an embodiment of the present disclosure, a strong shearing force is applied to the electrode composition containing polytetrafluoroethylene (PTFE) as a binder, and the electrode composition can be mixed by a physical mixing method according to the fiberization of polytetrafluoroethylene (PTFE).

Therefore, in the electrode for secondary battery according to an embodiment of the present disclosure, the electrode composition may be dry-mixed without a separate solvent or additive, whereby it is very effective for bridging between active material particles or bridging between active material particles and a current collector, and also can prevent damage to the active material that occurs during the heat treatment process at high temperature according to the existing mixing method.

The binder containing polytetrafluoroethylene (PTFE) may have different diameters of fibers drawn out from the polytetrafluoroethylene (PTFE) particles as shearing forces with different speeds are applied by the method for manufacturing an electrode according to an embodiment of the present disclosure.

In one example, the binder includes a first fiber 200 and a second fiber 300. The diameter of the first fiber 200 is larger than the diameter of the second fiber 300.

The diameter of the first fiber 200 may be 6.1 um or more and 64.9 um or less. More preferably, the diameter of the first fiber 200 may be 8 um or more and 60 um or less. In one example, the diameter of the first fiber 200 may be 10 um or more and 55 um or less.

The diameter of the second fiber 300 may be 0.01 um or more and 2.0 um or less. More preferably, the diameter of the second fiber 300 may be 0.05um or more and 1.5um or less. In one example, the diameter of the second fiber 300 may be 0.1 um or more and 1.0 um or less.

Therefore, the electrode for secondary battery according to the present embodiment has the diameter of the first fiber 200 and the second fiber 300 of the binder within the above-mentioned range, so that the tensile strength is improved by the first fiber 200, and the bridging effect between particles inside the electrode composition can be improved by the second fiber 300. In addition to this, the first fiber 200 can prevent an agglomeration phenomenon of the binder and improve the dispersibility, and thus can be excellent in the resistance reducing effect of the electrode containing the above electrode composition.

Unlike the same, when the diameter of the first fiber 200 is outside the above-mentioned range, the prevention of the agglomeration phenomenon by the first fiber 200 may be reduced, so that both the tensile strength and the extension rate may be reduced, and the dispersibility of the electrode composition may also be reduced. Further, when the diameter of the second fiber 300 is too large, the bridging effect between particles inside the electrode composition may be reduced.

Further, the content of the binder may be 1% by weight or more and 5% by weight or less based on the total weight of the electrode composition. More preferably, the content of the binder may be 1.5% by weight or more and 4.5% by weight or less based on the total weight of the electrode composition. In one example, the binder content can be 2% by weight or more and 4% by weight or less based on the total weight of the electrode composition.

Therefore, the electrode for secondary battery according to the present embodiment contains the binder within the above-mentioned range, whereby the fiberization of the binder can be maximized, and the bridging effect between particles inside the electrode composition can be excellent, and thus the tensile strength may be excellent. In addition to this, it is possible to prevent an agglomeration phenomenon of the binder and improve the dispersibility, and thus can be excellent in the resistance reducing effect of the electrode containing the above electrode composition.

Unlike the same, when the total content of the binder is less than 1% by weight, the bridging effect between particles inside the electrode composition is insufficient and thus, the tensile strength may also be greatly reduced. Further, when the total content of the binder is more than 5% by weight, in the electrode including the electrode composition, the binder acts as a resistance, which causes a problem that it is difficult to expect high output.

The active material may be a positive electrode active material. The positive active material may include, for example, lithium cobalt oxide (LiCoO₂), lithium nickel oxide (LiNiO₂), lithium manganese oxide, lithium copper oxide (Li₂CuO₂), vanadium oxide, a Ni-site type lithium nickel oxide, lithium manganese composite oxide, lithium manganese composite oxide having a spinel structure, LiMn₂O₄ in which a part of Li in formula is substituted with an alkaline earth metal ion, a disulfide compound; Fe₂(MoO₄)₃, and the like.

In one example, the active material may include lithium manganese oxide (LMO). Here, the active material may be contained in an amount of 85% by weight to 99% by weight based on the total weight of the electrode composition. More preferably, the active material may be contained in an amount of 87% by weight to 98% by weight based on the total weight of the electrode composition. In one example, the active material may be contained in an amount of 89% by weight to 97% by weight based on the total weight of the electrode composition.

The conductive material is used to impart conductivity to the electrode, and the conductive material can be used without particular limitation as long as it has electronic conductivity without causing chemical changes in the battery to be configured. Specific examples thereof include carbon-based materials such as carbon black, acetylene black, ketjen black, channel black, furnace black, lamp black, thermal black, carbon graphene and carbon fiber; graphite such as natural graphite and artificial graphite; metal powder or metal fibers such as copper, nickel, aluminum and silver; conductive whiskey such as zinc oxide and potassium titanate; conductive metal oxides such as titanium oxide; or a conductive polymer such as a polyphenylene derivative, and these may be used either singly or as a mixture of two or more. Here, the conductive material may be contained in an amount of 1% by weight to 10% by weight based on the total weight of the electrode.

The above-mentioned electrode for secondary battery may be included as a positive electrode in a secondary battery according to another embodiment of the present disclosure. More specifically, the secondary battery according to another embodiment of the present disclosure may include an electrode assembly including a positive electrode, a negative electrode, and a separator interposed between the positive electrode and the negative electrode, and an electrolyte.

The negative electrode can be manufactured by applying a negative electrode slurry including a negative electrode active material, a polymer material, a conductive material and the like to the negative electrode current collector, similarly to the electrode for secondary battery.

The negative electrode can also be manufactured in a form in which the negative electrode slurry including the negative electrode active material is attached or applied onto the negative electrode current collector, and the negative electrode slurry may further include the conductive material and polymer material as described above, together with the negative electrode active material.

A negative electrode active material for a lithium secondary battery, which is common in the art, can be used as the negative electrode active material. In one example. a material such as lithium metal, lithium alloy, petroleum coke, activated carbon, graphite, silicon, tin, metal oxide or other carbons may be used.

The negative electrode current collector is not particularly limited as long as it has high conductivity without causing chemical changes to the battery. For example, copper, stainless steel, aluminum, nickel, titanium, calcined carbon, copper or stainless steel having a surface treated with carbon, nickel, titanium, silver, etc., aluminum-cadmium alloy, and the like can be used.

The separator separates the negative electrode and the positive electrode, and provides a passage for lithium ions to move. Any separator may be used without particular limitation as long as it is generally used as a separator in a lithium secondary battery. Particularly, a separator having excellent moisture-retention ability for an electrolyte while having low resistance to the migration of electrolyte ions is preferable.

In addition, the electrolyte solution used herein may include an organic liquid electrolyte, an inorganic liquid electrolyte, a solid polymer electrolyte, a gel type polymer electrolyte, a solid inorganic electrolyte, a molten inorganic electrolyte or the like which can be used in the production of a lithium secondary battery, but is not limited thereto.

Specifically, the electrolyte solution may include an organic solvent and a lithium salt. As the organic solvent, any solvent can be used without particular limitation as long as it can serve as a medium through which ions involved in the electrochemical reaction of the battery can migrate. The lithium salt may be used without particular limitation as long as it is a compound capable of providing lithium ions used in a lithium secondary battery.

In order to improve the lifespan characteristics of the battery, suppress a reduction in battery capacity and improve discharge capacity of the battery, the electrolyte solution may further include, for example, one or more additives such as a haloalkylene carbonate-based compound such as difluoroethylene carbonate, pyridine, triethylphosphite, triethanolamine, cyclic ether, ethylene diamine, n-glyme, hexaphosphoric triamide, a nitrobenzene derivative, sulfur, a quinone imine dye, N-substituted oxazolidinones, N,N-substituted imidazolidine, ethylene glycol dialkyl ether, an ammonium salt, pyrrole, 2-methoxy ethanol, or aluminum trichloride, in addition to the above electrolyte components. In this case, the additive may be included in an amount of 0.1% by weight to 5% by weight based on the total weight of the electrolyte solution.

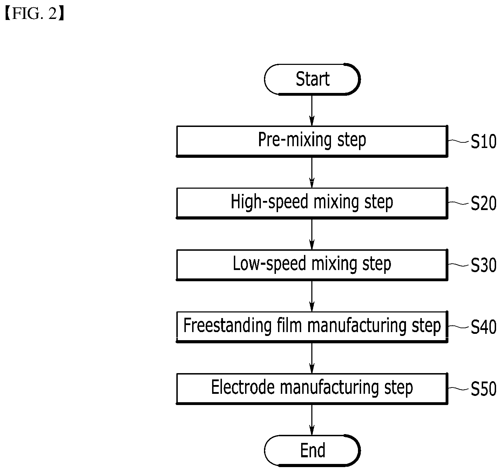

Fig. 2 is a flowchart showing a method of manufacturing an electrode for secondary battery according to another embodiment of the present disclosure.

Referring to Fig. 2, a method of manufacturing an electrode for secondary battery according to the present embodiment includes a pre-mixing step (S10) of mixing an active material, a conductive material and a binder, a high-speed mixing step (S20) of applying a shearing force at a first speed to prepare a first electrode composition, a low-speed mixing step (S30) of applying a shearing force to the first electrode composition at a second speed to prepare a second electrode composition, and a step (S40) of manufacturing a freestanding film using the second electrode composition, and a step (S50) of manufacturing an electrode through a lamination process after attaching the freestanding film onto the electrode current collector.

Here, in the pre-mixing step (S10 ), the active material, the conductive material, and the binder may be dry-mixed. The first speed is faster than the second speed.

More specifically, the first speed may be 2000rpm to 6000rpm, and the second speed may be 1 rpm to 50 rpm. In one example, the first speed may be 2500 rpm to 5500 rpm, and the second speed may be 5 rpm to 40 rpm.

Therefore, the high-speed mixing step (S20) is performed at a speed within the above-described range, so that sufficient internal pressure and frictional force can be applied to allow the fiberization of polytetrafluoroethylene (PTFE) to proceed. However, in the case of the high-speed mixing step (S20), the mixing speed is relatively fast and the agglomeration of polytetrafluoroethylene (PTFE) may proceed quickly, so that the first fibers 200 having a relatively large diameter may be formed and thus, the tensile strength of the electrode can be further improved.

On the other hand, if the high-speed mixing step (S20) proceeds at an excessively high speed outside the above-mentioned range, the first fiber 200 having an excessively large diameter are formed, which may make it difficult to fiberize the second fibers 300 from the first fibers 200. Also, on the contrary, if it proceeds at an excessively slow speed, the first fibers 200 having an excessively small diameter may be formed, thereby reducing the tensile strength of the electrode.

Further, the low-speed mixing step (S30) is performed at a speed in the above-mentioned range and thus, the mixing speed is relatively very slow, and a strong internal pressure is applied to polytetrafluoroethylene (PTFE), while the speed at which frictional force is applied can be very slow. That is, in the low-speed mixing step (S30), a second fiber 300 with a relatively small diameter may be formed by contact between polytetrafluoroethylene (PTFE) or contact between polytetrafluoroethylene (PTFE) and the active material at a rate in the above-mentioned range, whereby the bridging effect between particles inside the electrode composition can be improved.

On the other hand, if the low-speed mixing step (S30) proceeds at an excessively high speed outside the above-mentioned range, the second fiber 300 having an excessively large diameter is formed, the degree of bridging between particles in the electrode composition may be reduced. Further, on the contrary, when the mixing step proceeds at an excessively slow speed, there is a problem that agglomeration phenomenon between the second fibers 300 occurs.

Hereinafter, the contents of the present disclosure will be described by way of more specific examples. However, the following examples are for illustrative purposes only, and the scope of the present disclosure is not limited thereto.

### <Example 1>

A premixing step of preparing a mixture in which an active material, a conductive material, and a binder were dry-mixed using a Waring blender was performed. Here, the active material was 95 wt% of lithium manganese oxide (LMO), and the conductive material was 2 wt% of Super C65. Further, the binder was 3 wt% of polytetrafluoroethylene (PTFE). At this time, the pre-mixing step (S10) was performed at 5000 rpm for 1 minute, so that only mixing of the active material, the conductive material, and the binder was induced.

Then, a high-speed mixing step (S20), in which a shearing force was applied to the mixture prepared in the pre-mixing step (S10) at a first speed to prepare a first electrode composition, was performed using Nobilta NOB-130 equipment (available from Hosokawa Micron). At this time, the high-speed mixing step (S20) was performed at 3000 rpm for 10 minutes, so that the first fiber 200 was formed in the first electrode composition.

Then, a low-speed mixing step (S30), in which a shearing force was applied to the first electrode composition prepared in the high-speed mixing step (S20) at a second speed to prepare a second electrode composition, was performed using a Bench Kneader PBV-0.1L equipment (available from Irie Shokai). At this time, the low-speed mixing step (S30) was performed at 10 rpm for 5 minutes, so that the second fiber 300 was formed together with the first fiber 200 in the second electrode composition.

### <Example 2>

An electrode composition was prepared in the same manner as in Example 1, except that in Example 1, the high-speed mixing step (S20) was performed at 5000 rpm.

### <Example 3>

An electrode composition was prepared in the same manner as in Example 1, except that in Example 1, the high-speed mixing step (S20) was performed at 5000 rpm, and the low-speed mixing step (S30) was performed at 30 rpm.

### <Comparative Example 1>

An electrode composition was prepared in the same manner as in Example 1, except that in Example 1, the high-speed mixing step (S20) was performed at 500 rpm.

### <Comparative Example 2>

An electrode composition was prepared in the same manner as in Example 1, except that in Example 1, the high-speed mixing step (S20) was performed at 7000 rpm for 2 minutes.

### <Comparative Example 3>

An electrode composition was prepared in the same manner as in Example 1, except that in Example 1, the low-speed mixing step (S30) was performed at 60 rpm.

### <Comparative Example 4>

An electrode composition was prepared in the same manner as in Example 1, except that in Example 1, the low-speed mixing step (S30) was performed at 100 rpm.

### <Experimental Example 1 (Measurement of Fiber Diameter)>

About 30 or more SEM images were analyzed for each electrode composition prepared in Examples 1 to 3 and Comparative Examples 1 to 4, and the average value of the measured fiber diameters was calculated. The results are shown in Table 1 below.

**[Table 1]**

| | Composition | | | First fiber (um) | Second fiber (um) |
|---|---|---|---|---|---|
| | Positive electrode active material (%) | Conductive material (%) | Binder (%) | | |
| Example 1 | 95 | 2 | 3 | 45 | 0.1 |
| Example 2 | 95 | 2 | 3 | 21 | 0.1 |
| Example 3 | 95 | 2 | 3 | 18 | 0.5 |
| Comparative Example 1 | 95 | 2 | 3 | 6 | 0.1 |
| Comparative Example 2 | 95 | 2 | 3 | 65 | 0.1 |
| Comparative Example 3 | 95 | 2 | 3 | 43 | 2.5 |
| Comparative Example 4 | 95 | 2 | 3 | 45 | 5.1 |

### <Experimental Example 2 (Measurement of Tensile Strength and Extension rate)>

For the electrode compositions prepared in Examples 1 to 3 and Comparative Examples 1 to 4, respectively, a freestanding film manufacturing step (S30) of manufacturing a freestanding film having a length of 20mm and a width of 20mm was performed using a Roll Mill equipment (available from Inoue MFG). For each manufactured freestanding film, both ends were fixed with a jig, and then the tensile strength of the freestanding film was measured at a speed of 50 mm/min using Instron UTM equipment, respectively. The results are shown in Table 2 below.

Further, the extension rate was calculated by multiplying the length at the time of breakage / the length of the initial sample for each manufactured freestanding film by 100, and the results are shown in Table 2 below.

**[Table 2]**

| | Composition | | | Maximum tensile strength (kgf/cm²) | Extension rate (%) |
|---|---|---|---|---|---|
| | Positive electron active material (%) | Conductive material (%) | Binder (%) | | |
| Example 1 | 95 | 2 | 3 | 16 | 105 |
| Example 2 | 95 | 2 | 3 | 15 | 104 |
| Example 3 | 95 | 2 | 3 | 13 | 105 |
| Comparative Example 1 | 95 | 2 | 3 | 11 | 100 |
| Comparative Example 2 | 95 | 2 | 3 | 12 | 101 |
| Comparative Example 3 | 95 | 2 | 3 | 6 | 105 |
| Comparative Example 4 | 95 | 2 | 3 | 4 | 106 |

### <Experimental Example 3 (Measurement of Contact Angle)>

Referring to Fig. 2, for Examples 1 to 3 and Comparative Examples 1 to 4, the freestanding films manufactured in Experimental Example 2 were roll-pressed on a current collector which is an aluminum foil, and then the loading value was set to 5mAh/cm² and the porosity to 30%. Under these conditions, an electrode manufacturing step (S40) of manufacturing a positive electrode was performed. Then, each of the manufactured electrodes was randomly sampled into a size of 5 cm ^{∗} 5 cm, and 200ul of distilled water was dropped on a total of 5 places corresponding to each corner and the center portion to measure the contact angle, and the average and standard deviations were calculated. The results are shown in Table 3 below.

**[Table 3]**

| | Composition | | | Contact angle (°) |
|---|---|---|---|---|
| | Positive electrode active material (%) | Conductive material (%) | Binder (%) | |
| Example 1 | 95 | 2 | 3 | 129.6**±0.8** |
| Example 2 | 95 | 2 | 3 | 129.4**±0.4** |
| Example 3 | 95 | 2 | 3 | 129.4**±1.0** |
| Comparative Example 1 | 95 | 2 | 3 | 129.1**±0.3** |
| Comparative Example 2 | 95 | 2 | 3 | 129.8**±1.5** |
| Comparative Example 3 | 95 | 2 | 3 | 115.4**±13.2** |
| Comparative Example 4 | 95 | 2 | 3 | 109.4**±18.7** |

### <Experimental Result Analysis>

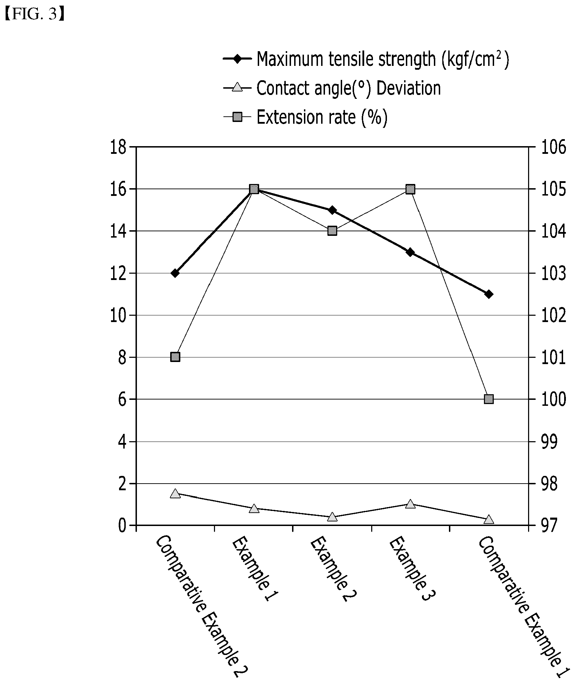

Fig. 3 is a graph for comparing tensile strength, extension rate, and contact angle deviation according to the diameter of a first fiber 200 of a binder included in an electrode for secondary battery in Examples and Comparative Examples of the present disclosure. Particularly, Fig. 3 is a graph for comparing the tensile strength, extension rate and contact angle deviation of Examples 1 to 3, Comparative Examples 1 and 2, respectively, among the results shown in Tables 1 to 3. At this time, the diameter of the first fiber 200 is gradually decreased in the order of Comparative Example 2, Example 1, Example 2, Example 3, and Comparative Example 1.

In the case of Comparative Example 2, the diameter of the first fiber 200 is 65 um, which has a larger value than that of Examples, and in the case of Comparative Example 1, the diameter of the first fiber 200 is 6 um, which has a smaller value than that of Examples.

Referring to Fig. 3, it can be confirmed that Comparative Example 2 is not excellent in the tensile strength, extension rate, and contact angle deviation. Further, it can be confirmed that Comparative Example 1 is excellent in the contact angle deviation, but not excellent in the tensile strength and extension rate. That is, when the diameter of the first fiber 200 is too large compared to the Example, it can be confirmed that the tensile strength, extension rate, and contact angle deviation are not all excellent. In addition, when the diameter of the first fiber 200 is too small compared to that of Examples, it can be confirmed that the contact angle deviation is excellent, but the tensile strength and extension rate are lowered.

Thereby, when the first fibers 200 included in the binder have the same diameter as in Examples 1 to 3, it can be confirmed that the tensile strength, extension rate and contact angle deviation are all excellent as a whole.

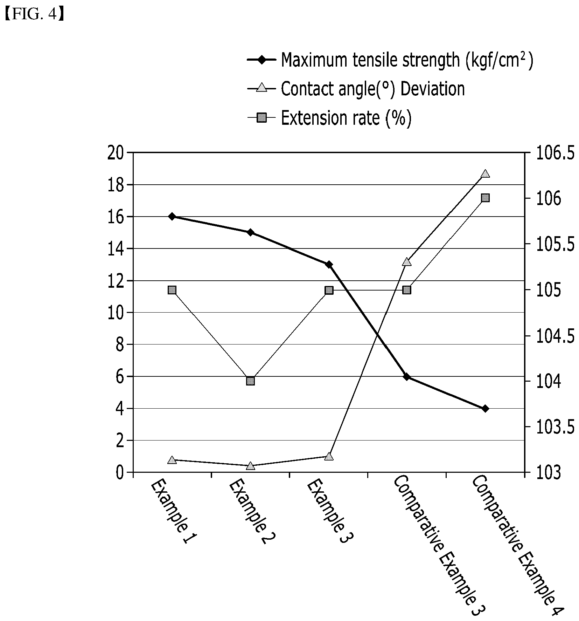

Fig. 4 is a graph for comparing tensile strength, extension rate, and contact angle deviation according to the diameter of a second fiber of a binder included in an electrode for secondary battery in Examples and Comparative Examples of the present disclosure. Particularly, Fig. 4 is a graph for comparing the tensile strength, extension rate, and contact angle deviation of Examples 1 to 3, Comparative Example 3, and Comparative Example 4, respectively, among the results shown in Tables 1 to 3. At this time, the diameter of the second fiber 300 is gradually increased in the order of Examples 1 to 3, Comparative Example 3, and Comparative Example 4.

Referring to Fig. 4, it can be confirmed that the extension rate is generally excellent, but as the diameter of the second fiber 300 gradually increases, the tensile strength and contact angle deviation gradually decrease. That is, when the diameter of the second fiber 300 is too large compared to that of Examples, it can be confirmed both the tensile strength and contact angle deviation are not excellent.

Accordingly, when the second fiber included in the binder has the same diameter as Examples 1 to 3, it can be confirmed that the tensile strength, extension rate, and contact angle deviation are all excellent as a whole.

Although the invention has been shown and described above with reference to the preferred embodiments, the scope of the present disclosure is not limited thereto, and numerous other variations and modifications can be devised by those skilled in the art using the principles of the invention defined in the appended claims, which will also fall within the spirit and scope of the present disclosure.

## Claims

1. An electrode for secondary battery comprising:
an electrode current collector; and
an electrode layer located on the electrode current collector,
wherein the electrode layer comprises an electrode composition in which an active material, a conductive material, and a binder are dry-mixed,
wherein the binder comprises a first fiber and a second fiber that are fiberized from the first fiber, and
wherein a diameter of the first fiber is larger than a diameter of the second fiber.

2. The electrode for secondary battery according to claim 1, wherein:
the diameter of the first fiber is 6.1 um or more and 64.9 um or less.

3. The electrode for secondary battery according to claim 1, wherein:
the diameter of the second fiber is 0.01 um or more and 2.0 um or less.

4. The electrode for secondary battery according to claim 1, wherein:
a content of the binder is 1% by weight to 5% by weight based on the total weight of the electrode composition.

5. The electrode for secondary battery according to claim 1, wherein:
the electrode for secondary battery has a contact angle deviation of 0.01 degrees or more and 5.0 degrees or less.

6. The electrode for secondary battery according to claim 1, wherein:
the binder comprises polytetrafluoroethylene (PTFE).

7. The electrode for secondary battery according to claim 1, wherein:
the active material comprises at least one selected from the group consisting of lithium cobalt oxide (LiCoO₂), lithium nickel oxide (LiNiO₂), lithium copper oxide (Li₂CuO₂), vanadium oxide, a Ni-site type lithium nickel oxide, lithium manganese composite oxide, lithium manganese composite oxide having a spinel structure, LiMn₂O₄ in which a part of Li in formula is substituted with an alkaline earth metal ion, a disulfide compound; Fe₂(MoO₄)₃, and lithium manganese oxide (LMO).

8. The electrode for secondary battery according to claim 1, wherein:
the electrode composition is manufactured into a freestanding film, and
the freestanding film is attached onto the electrode current collector.

9. The electrode for secondary battery according to claim 8, wherein:
the freestanding film has a tensile strength of 13kgf/cm² or more and 30kgf/cm² or less.

10. A method of manufacturing an electrode for secondary battery, the method comprising the steps of:
dry-mixing an active material, a conductive material and a binder to prepare a mixture;
applying a shearing force to the mixture at a first speed to prepare a first electrode composition;
applying a shearing force to the first electrode composition at a second speed to prepare a second electrode composition, and
manufacturing an electrode for secondary battery in which an electrode layer including the second electrode composition is located on an electrode current collector,
wherein the first speed is faster than the second speed.

11. The method of manufacturing an electrode for secondary battery according to claim 10, wherein:
the binder included in the first electrode composition comprises a first fiber,
the binder included in the second electrode composition comprises the first fiber and the second fiber that are fiberized from the first fiber, and
a diameter of the first fiber is larger than a diameter of the second fiber.

12. The method of manufacturing an electrode for secondary battery according to claim 11, wherein:
the diameter of the first fiber is 6.1 um or more and 64.9 um or less.

13. The method of manufacturing an electrode for secondary battery according to claim 11, wherein:
the diameter of the second fiber is 0.01 um or more and 2.0 um or less.

14. The method of manufacturing an electrode for secondary battery according to claim 10, wherein:
the first speed is 2000rpm to 6000rpm, and
the second speed is 1 rpm to 50 rpm.

15. The method of manufacturing an electrode for secondary battery according to claim 10, wherein:
a content of the binder is 1% by weight to 5% by weight based on the total weight of the electrode composition.

16. The method of manufacturing an electrode for secondary battery according to claim 10, wherein:
the binder comprises polytetrafluoroethylene (PTFE).

17. The method of manufacturing an electrode for secondary battery according to claim 10, wherein:
the active material comprises at least one selected from the group consisting of lithium cobalt oxide (LiCoO₂), lithium nickel oxide (LiNiO₂), lithium copper oxide (Li₂CuO₂), vanadium oxide, a Ni-site type lithium nickel oxide, lithium manganese composite oxide, lithium manganese composite oxide having a spinel structure, LiMn₂O₄ in which a part of Li in formula is substituted with an alkaline earth metal ion; a disulfide compound, Fe₂(MoO₄)₃, and lithium manganese oxide (LMO).

18. The method of manufacturing an electrode for secondary battery according to claim 10, wherein:
in the step of manufacturing an electrode for secondary battery in which an electrode layer including the second electrode composition is located on an electrode current collector,
the second electrode composition is manufactured into a freestanding film and attached onto the electrode current collector.

19. The method of manufacturing an electrode for secondary battery according to claim 18, wherein:
the freestanding film has a tensile strength of 13kgf/cm² or more and 30kgf/cm² or less.

20. A secondary battery comprising the electrode for secondary battery as set forth in claim 1.
